(19) Europäisches Patentamt
European Patent Office
Office européen des brevets

(11) EP 2 239 154 B1

(12) **EUROPEAN PATENT SPECIFICATION**

(45) Date of publication and mention of the grant of the patent:
**26.10.2016 Bulletin 2016/43**

(21) Application number: **08869760.2**

(22) Date of filing: **18.12.2008**

(51) Int Cl.:
***B60C 17/00*** *(2006.01)* ***B60C 1/00*** *(2006.01)*
***B60C 9/00*** *(2006.01)* ***B60C 9/04*** *(2006.01)*
***B60C 11/00*** *(2006.01)* ***C08L 7/00*** *(2006.01)*
***C08L 9/00*** *(2006.01)*

(86) International application number:
**PCT/JP2008/073072**

(87) International publication number:
**WO 2009/087878 (16.07.2009 Gazette 2009/29)**

(54) **SIDE PART REINFORCING LAYER AND RUN-FLAT TIRE**

SEITENTEILVERSTÄRKUNGSSCHICHT UND REIFEN MIT NOTLAUFRING

PLI DE RENFORT DE PARTIE LATÉRALE ET PNEUMATIQUE À ROULAGE À PLAT

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **04.01.2008 JP 2008000113**

(43) Date of publication of application:
**13.10.2010 Bulletin 2010/41**

(73) Proprietor: **Sumitomo Rubber Industries, Ltd.**
**Kobe-shi, Hyogo 651-0072 (JP)**

(72) Inventor: **IMOTO, Yoji**
**Kobe-shi**
**Hyogo 651-0072 (JP)**

(74) Representative: **Manitz, Finsterwald & Partner GbR**
**Martin-Greif-Strasse 1**
**80336 München (DE)**

(56) References cited:
**EP-A1- 1 798 073**
**WO-A1-2007/129580**
**JP-A- 7 032 828**
**JP-A- 2001 164 052**
**JP-A- 2006 192 927**
**JP-A- 2006 206 864**
**JP-A- 2007 161 071**
**JP-A- 2007 238 078**
**US-A1- 2006 060 284**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 239 154 B1

## Description

TECHNICAL FIELD

The present invention relates to a runflat tire having a side-reinforcing rubber layer excellent in runflat performance.

BACKGROUND ART

Conventional runflat tires have a structure containing high-hardness rubber for side reinforcement disposed inside the sidewall portions and enable running a predetermined distance to a service station even in a state such that the internal pressure has been reduced due to puncture. The installation of such a runflat tire causes no necessity of keeping a spare tire and thus a weight reduction of the whole vehicle can be expected. However, the velocity and the running distance of a runflat tire is not sufficient under puncture conditions, and thus an improvement in durability of runflat tires has been desired.

Examples of an effective means for improving durability of a runflat tire include a method in which a rubber for reinforcement is thickened to restrain deformation, so that breakage due to deformation is prevented. This method, however, results in an increase in the mass of the tire, so that the originally demanded weight reduction of a runflat tire cannot be achieved.

Further, examples of the effective means for improving durability of a runflat tire include a method in which the amount of a reinforcing filler, such as carbon black, is increased and the filler is added to increase the hardness of the rubber for reinforcement and thereby restrain deformation. An improvement in runflat durability, however, cannot be expected so much because a great load is put on processes such as kneading and extruding and a heat build-up property increases in physical properties after vulcanization.

In order to improve the durability of a runflat tire, it has been attempted to use large amounts of a vulcanizing agent and a vulcanization accelerator without increasing the amount of carbon black. This technology can increase the vulcanization density and can reduce deformation and heat build-up; however, it reduces the elongation of the rubber to cause a tendency that the strength at break decreases. On the other hand, a technology of blending a lamellar natural ore such as mica into a rubber for sidewalls of a tire has also been proposed. It, however, is not strong enough for supporting a load because of its low hardness even if it is used as a rubber for side reinforcement because a rubber composition is required to have flex resistance.

Japanese Patent Laying-Open No. 2005-280459 (patent document 1) discloses a runflat tire that possesses a side-reinforcing rubber layer with an approximately crescent cross-sectional shape and that is disposed on the inner side surface and within a sidewall region of a carcass, wherein the side-reinforcing rubber layer has an inner side rubber portion that is disposed on an inner side of a tire axial direction and that has a JIS A hardness of 70 to 95° and an outer side rubber portion that is disposed on an outer side of the tire axial direction and that has a JIS A hardness which is less than that of the inner side rubber portion and is 60 to 75°.

Japanese Patent Laying-Open No. 2007-161071 (patent document 2) discloses a runflat tire that possesses a side-reinforcing rubber layer with a crescent cross-sectional shape which is disposed within a sidewall portion and on the inner side of a carcass, wherein the carcass is composed of a carcass ply composed of carcass cords which are arranged at an angle of 70 to 90° with respect to the tire circumferential direction and are coated with a topping rubber, and aramid fiber cords or polyethylene naphthalate fiber cords are used as the carcass cords.

US 2006/0060284 A1 relates to a pneumatic tire having a sidewall comprising an outer rubber layer and a rubber strip, wherein the rubber strip is composed of a rubber component consisting of butadiene rubber and isoprene rubber, of carbon black and of aramide fibers.

EP 1 798 073 A1 relates to a runflat tire including a side wall reinforcing layer consisting of a rubber composition not containing any fibres.

Patent document 1: Japanese Patent Laying-Open No. 2005-280459

Patent document 2: Japanese Patent Laying-Open No. 2007-161071

DISCLOSURE OF THE INVENTION

PROBLEMS TO BE SOLVED BY THE INVENTION

The present invention relates to a rubber composition for side reinforcement of a runflat tire, the rubber composition being low in heat build-up property and high in strength, and it particularly provides a runflat tire which has been improved in durability and increased in running distance and velocity at the time of puncture due to the use of the

composition.

Furthermore, in light of a recent trend of increasing in velocity and running distance during runflat operations, a further improvement in both runflat durability and steering stability has been demanded strongly. Objects include to increase steering stability and durability during runflat operations while reducing the weight of a runflat tire and to provide a runflat tire which achieves increase in both velocity and running distance during runflat operations by basically using, as carcass cords, aramid fiber cords which are superior in heat resistance and higher in elasticity in comparison to rayon fiber cords.

MEANS FOR SOLVING THE PROBLEMS

The present invention relates to a runflat tire comprising a carcass extending from a tread portion, a belt layer disposed inside the tread portion and on the radially outward of said carcass, and a side portion reinforcing layer which is disposed inside both the sidewall portion and said carcass and has a crescent cross-sectional shape extending from the center portion having a maximum thickness toward both the radially inward and the radially outward with gradual decrease in thickness, wherein the side portion reinforcing layer for a runflat tire is made of a rubber composition prepared by blending 0.1 to 50 parts by mass of a reinforcing material of polyparaphenylene terephthalamide based on 100 parts by mass of a rubber component containing 20 to 80% by mass of a natural rubber and/or a polyisoprene rubber and 80 to 20% by mass of a polybutadiene rubber.

The reinforcing material is preferably polyparaphenylene terephthalamide (PPTA) and/or a masterbatch containing the polyparaphenylene terephthalamide (PPTA) and stearic acid. The complex elastic modulus (E*) of the rubber composition is preferably 10 MPa or more.

It is preferable that the carcass of the runflat tire of the present invention is made of a carcass ply made of a carcass cord which is arranged at an angle of 45 to 90° with respect to the circumferential direction of the tire and is covered with a topping rubber, and the carcass cord is an aramid fiber cord. The carcass cord preferably has a two-strand twist structure in which two first-twisted filament bundles are twisted together by second-twisting.

Further, a preferable embodiment of the present invention is a runflat tire, wherein the carcass cord has a twisting coefficient T represented by the following formula ranging from 0.5 to 0.8:

$$T = N \times \sqrt{\{(0.125 \times D/2)/\rho\}} \times 10^{-3} \ \ldots \ (1)$$

wherein N is a second twisting number (turns/10 cm), D is a total nominal decitex (fineness) and p is a specific gravity of a cord material.

The topping rubber of the carcass ply preferably has a complex elastic modulus (E*) within a range of 5 to 13 MPa.

Further, a preferable embodiment of the present invention is a runflat tire (1) according to any one of claims 4 to 8, wherein in the tire meridian cross section at a normal internal pressure condition where the tire is attached to a regular rim and inflated at a normal internal pressure, when a point on the tire external surface which is apart from the tire equatorial plane C by a distance SP which is 45% of the tire maximum section width SW is assumed to be P, the radius of curvature, RC, of the tire external surface decreases gradually from an equatorial point CP at which the tire external surface intersects with the tire equatorial plane C to the point P, and the following relationships are satisfied when Y60, Y75, Y90 and Y100 denote, respectively, radial distances between the points on the tire external surface apart from the tire equatorial plane C by 60%, 75%, 90% and 100% of the half width (SW/2) of the tire maximum section width SW and the normal CX with respect to the tire equatorial plane C at the equatorial point P, and SH denotes the tire section height:

$0.05 < Y60/SH \leq 0.1$

$0.1 < Y75/SH \leq 0.2$

$0.2 < Y90/SH \leq 0.4$

$0.4 < Y100/SH \leq 0.7$

The "regular rim" referred to herein is a rim determined for each tire by a standard system including a tire standard and it means, for example, a standard rim in JATMA, a "Design Rim" in TRA, or a "Measuring Rim" in ETRTO. Further, the "normal internal pressure" is a pneumatic pressure determined for each tire by the standards, and it is a maximum pneumatic pressure in JATMA, a maximum value given in a table "TIRE LOAD LIMITS AT VARIOUS COLD

INFLATION PRESSURES" in TRA, and an "INFLATION PRESSURE" in ETRTO. As to a tire for passenger vehicles, it is assumed to be 180 kPa.

EFFECTS OF THE INVENTION

The present invention is directed to a runflat tire being excellent in running durability during puncture, namely, runflat property because of the use of a side portion reinforcing layer (11) for a runflat tire, the layer being made of a rubber composition prepared by blending 0.1 to 50 parts by mass of a reinforcing material of polyparaphenylene terephthalamide (PPTA) based on 100 parts by mass of a rubber component comprising 20 to 80% by mass of a natural rubber and/or a polyisoprene rubber and 80 to 20% by mass of a polybutadiene rubber.

The adoption of an aramid fiber cord particularly superior in heat resistance as a carcass cord makes it possible to inhibit cord damage caused by temperature increase which occurs during runflat running. Moreover, since an aramid fiber cord is of high elasticity and can increase the load supporting capability, it is possible to reduce the number of plies, i.e., to reduce tire deformation during runflat operations while reducing the weight of the tire, and it is possible to increase the runflat durability in combination with the improvement in heat resistance. Moreover, it is also possible to improve the steering stability during runflat running and, therefore, to achieve increase in velocity and running distance during runflat running.

BRIEF DESCRIPTION OF THE DRAWINGS

Fig. 1 is a meridian section which illustrates one example in a case where the pneumatic tire of the present invention is a runflat tire.
Fig. 2 is a schematic diagram of a carcass cord.
Fig. 3 is a diagram which illustrates a profile of a tire external surface.
Fig. 4 is a diagram which illustrates the range of RYi in each position on the tire external surface.

DESCRIPTION OF THE REFERENCE SIGNS

1: runflat tire, 2: tread portion, 3: sidewall portion, 4: bead portion, 5: bead core, 6: carcass, 7: tread-reinforcing cord layer, 8: bead apex, 9: belt, 10: band, 11: side portion reinforcing layer, 20: carcass cord, 21: strand.

BEST MODES FOR CARRYING OUT THE INVENTION

The present invention is directed to a runflat tire comprising a carcass extending from a tread portion, a belt layer disposed inside the tread portion and on the radially outward of said carcass, and a side portion reinforcing layer which is disposed inside both the sidewall portion and said carcass and has a crescent cross-sectional shape extending from the center portion having a maximum thickness toward both the radially inward and the radially outward with gradual decrease in thickness, wherein the side portion reinforcing layer for a runflat tire is made of a rubber composition prepared by blending 0.1 to 50 parts by mass of a reinforcing material containing polyparaphenylene terephthalamide (PPTA) based on 100 parts by mass of a rubber component containing 20 to 80% by mass of a natural rubber and/or a polyisoprene rubber and 80 to 20% by mass of a polybutadiene rubber.

<Rubber component>

In the natural rubber of the side portion reinforcing layer, the content of the natural rubber (NR) and/or the polyisoprene rubber (IR) in the rubber component preferably is 20% by mass to 80% by mass. When the content of the natural rubber (NR) and/or polyisoprene rubber (IR) is less than 20% by mass, the elongation percentage of a rubber composition is low and the productivity tends to decrease. When the content exceeds 80% by mass in the rubber component, there is a tendency that the rubber is degraded and the runflat performance deteriorates due to the heat generation during runflat running.

The polybutadiene rubber is contained in the rubber component in an amount of 20 to 80% by mass, and preferably 30 to 70% by mass. When the SBR including an SPBd crystalpolybutadiene rubber is less than 20% by mass, the rigidity of the rubber composition cannot be improved; on the other hand, when the polybutadiene rubber exceeds 80% by mass, the elongation percentage decreases and the runflat property deteriorates. Herein, for the polybutadiene rubber, a polybutadiene rubber which contains 1,4-cis-polybutadiene having a cis-bond content of 80% by mass or more, a polybutadiene rubber having a trans-bond content of 30% by mass or less, 1,2-polybutadiene (1,2BR), and 1,2-syndiotactic crystal (henceforth, referred to also as "SPBd crystal") can be used. It contains the SPBd crystal in an amount of 5 to 60% by mass, preferably 10 to 40% by mass. If the content of the SPBd crystal is less than 5% by mass, the strength and the rigidity are insufficient. If the content of the SPBd crystal is more than 60% by mass, the processability tends to deteriorate.

In the present invention, styrene-butadiene copolymer rubber (SBR), syndiotactic crystal-containing SBR, acrylonitrile-butadiene copolymer rubber (NBR), chloroprene rubber (CR), styrene-isoprene-butadiene copolymer rubber (SIBR), styrene-isoprene copolymer rubber, isoprene-butadiene copolymer rubber, etc. can be used as the rubber component. One or two kinds of these rubber components are preferably mixed in a range of 20% by mass or less of the rubber component.

<Reinforcing material of polyparaphenylene terephthalamide (PPTA)>

The rubber composition of the side portion reinforcing layer contains a reinforcing material of polyparaphenylene terephthalamide (PPTA) in an amount of 0.1 to 50 parts by mass based on 100 parts by weight of a rubber component. The reinforcing material is used in the form of polyparaphenylene terephthalamide (PPTA) itself or a masterbatch containing polyparaphenylene terephthalamide (PPTA) and stearic acid.

Polyparaphenylene terephthalamide (PPTA) is an aromatic polyamide having the following formula (1) or formula (2), wherein a molecular unit is extended at para positions or meta positions. The molecular bonding units m and n in the formula (1) and the formula (2) are usually within a range of 10 to 10,000. The polyparaphenylene terephthalamide (PPTA) can also have a structure in which molecules having molecular units extending at para positions and molecules having molecular units extending at meta positions are mixed.

[Chem. 1]

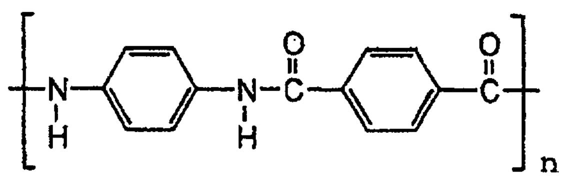

(1)

[Chem. 2]

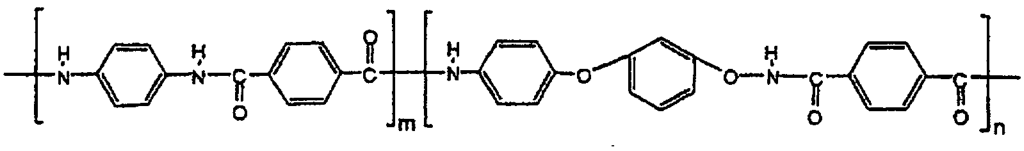

(2)

In the present invention, polyparaphenylene terephthalamide (PPTA) is used alone or it is preferably used in the form of a masterbatch containing stearic acid. The masterbatch contains polyparaphenylene terephthalamide (PPTA) in an amount of 10 to 80% by mass, preferably 30 to 70% by mass, and also contains stearic acid in an amount of 10 to 60% by mass. Moreover, the masterbatch preferably contains 0.5 to 15% by mass of a silane coupling agent, 0.1 to 2% by mass of a vulcanization accelerator and 0.05 to 2% by mass of sulfur.

Examples of the silane coupling agent include bis(3-triethoxysilylpropyl) tetrasulfide, bis(3-trimethoxysilylpropyl)tetrasulfide, bis(2-triethoxysilylpropyl)tetrasulfide, 3-mercaptopropyltriethoxysilane, and 2-mercaptoethyltrimethoxysilane. The amount of the silane coupling agent incorporated is within the range of 2 parts by mass to 20 parts by mass based on 100 parts by mass of silica.

As to the vulcanization accelerator, a sulfenamide-based accelerator, for example, is used most frequently as a delayed vulcanization accelerator because scorching hardly occurs in the preparation process and it is excellent in vulcanization properties. As to rubber properties after vulcanization, a rubber compound to which a sulfen amide-based accelerator is used has low exothermic properties in response to distortion caused by external force. Therefore, the durability of a runflat tire is improved.

Examples of the sulfenamide-based accelerator include TBBS (N-tert-butyl-2-benzothiazolylsulfenamide), CBS (N-cyclohexyl-2-benzothiazolylsulfenamide) and DZ (N,N'-dicyclohexyl-2-benzothiazolylsulfenamide). As other vulcanization accelerators, for example, MBT (mercaptobenzothiazole), MBTS (dibenzothiazyldisulfide), DPG (diphenyl guanidine) and the like can be used.

Polyparaphenylene terephthalamide (PPTA) reacts with a silane coupling agent in the presence of a vulcanization accelerator and sulfur. For example, when a silane coupling agent having a terminal SH group is used, SH groups react also with OH groups on the surfaces of carbon black, silica, etc., so that polyparaphenylene terephthalamide (PPTA) is bonded to carbon black and silica via the silane coupling agent and, thereby, the reinforcing effect can be enhanced more.

In order to adjust a rubber composition using the masterbatch, it can be blended simultaneously with a filler such as carbon black and silica. It is noted that the blended amount of the silane coupling agent to be blended separately to the rubber composition should be adjusted in view of the amount of silica contained in the masterbatch. The discharging temperature of the rubber composition after kneading is usually set at 130°C or more, and it is preferable to vulcanize it within 72 hours after the kneading.

<Carbon black>

Carbon black used for the present invention is not particularly limited and is preferably soft carbon such as FEF and FPF in order to maintain the rubber composition at low heat build-up. For example, the nitrogen absorption specific surface area ($N_2SA$) is 30 $m^2/g$ or more, preferably 35 $m^2/g$ or more. If the $N_2SA$ is less than 30 $m^2/g$, reinforcement runs short, so that sufficient durability cannot be obtained. The $N_2SA$ of the carbon black is 100 $m^2/g$ or less, preferably 80 $m^2/g$ or less, and more preferably 60 $m^2/g$ or less. If the $N_2SA$ is more than 100 $m^2/g$, the heat build-up property becomes unfavorably high.

The dibutyl phthalate oil absorption (DBP oil absorption) of the carbon black is 50 ml/100 g or more, and preferably 80 ml/100 g or more. If the DBP oil absorption is less than 50 ml/100 g, it becomes difficult to obtain sufficient reinforcement.

The content of the carbon black is 10 parts by mass or more, preferably 20 parts by mass or more, and more preferably 30 parts by mass or more based on 100 parts by mass of the rubber component. If the content of carbon black is less than 10 parts by mass, sufficient rubber strength cannot be obtained. Further, the content of carbon black is 80 parts by mass or less, preferably 70 parts by mass or less, and more preferably 60 parts by mass or less. If the content of carbon black is more than 80 parts by mass, blending viscosity increases, so that it becomes difficult to perform kneading and extruding of the rubber and additionally the heat build-up during runflat running increases.

<Blending agent>

Sulfur or a sulfur compound used for the rubber composition of the present invention is preferably insoluble sulfur from the viewpoint of restraining the surface precipitation of sulfur. With regard to the insoluble sulfur, the average molecular weight thereof is preferably 10000 or more, and particularly preferably from 100000 to 500000, and particularly preferably 300000 or less. If the average molecular weight is less than 10000, decomposition at low temperatures tends to occur and the sulfur tends to precipitate on the surface. If it is more than 500000, dispersability in the rubber tends to decrease.

The blended amount of sulfur or a sulfur compound is preferably 2 parts by mass or more, and more preferably 3 parts by mass or more, and is preferably 10 parts by mass or less, and more preferably 8 parts by mass or less. If the amount of sulfur or a sulfur compound is less than 2 parts by mass, sufficient hardness tends to fail to be obtained. If it exceeds 10 parts by mass, the storage stability of an unvulcanized rubber tends to deteriorate.

Furthermore, the side-reinforcing rubber composition of the present invention may contain zinc oxide, wax, stearic acid, oil, antioxidants, etc. that are usually used for rubber compositions unless the effects of the present invention is impaired.

<Filler>

In the rubber composition of the present invention, silica that is used for general-purpose rubber can be used. Examples thereof include dry-method white carbon, wet-method white carbon and colloidal silica. The wet-method white carbon, which contains hydrous silicic acid as a main component, is preferable among them.

In the present invention, a lamellar natural ore, for example, mica such as kaolinite, sericite, phlogopite, and muscovite can be blended. The aspect ratio (the ratio of the maximum diameter to the thickness) of a lamellar natural ore preferably is 3 or more in view of increasing rubber hardness. As to the average particle diameter of the lamellar natural ore, an ore which is as large as 2 $\mu m$ to 30 $\mu m$ is suitably used. It can be blended in an amount of 5 parts by mass to 120 parts by mass based on 100 parts by mass of the rubber component.

<Viscoelastic property of rubber composition>

The rubber composition of the side portion reinforcing layer has a complex elastic modulus (E*) of 10 Mpa or more. Moreover, the loss elastic modulus (E") and the complex elastic modulus (E*) preferably satisfy the following formula:

$$E''/(E^*)^2 \leq 7.0\times10^{-9}\ Pa^{-1}.$$

Particularly, $E''/(E^*)^2 \leq 6.8\times10^{-9}\ Pa^{-1}$ is preferable.

When (E*) is less than 10 Mpa, the side portion reinforcing layer deforms greatly during runflat operations. Moreover, when $E''/(E^*)^2$ is larger than $7.5\times10^{-9}\ Pa^{-1}$, there is a tendency that the amount of heat generated due to the deformation of the side portion reinforcing layer which occurs during runflat operations increases, so that thermal degradation of the rubber is promoted, resulting in breakage.

<Runflat tire>

One embodiment of the present invention is explained with reference to examples illustrated. Fig. 1 is a tire meridian sectional view in a normal internal pressure state which illustrates a runflat tire 1 of the present invention.

In Fig. 1, the runflat 1 of this embodiment has a carcass 6 that extends from a tread portion 2 to a bead core 5 of a bead portion 4 via a sidewall portion 3, and a tread-reinforcing cord layer 7 that is disposed inside the tread portion 2 and on the outside in the radial direction of the carcass 6.

The carcass 6 is formed from one or more carcass plies made of carcass cords which are arranged at an angle of 45 to 90° with respect to the circumferential direction of the tire and are covered with a topping rubber. In this example is illustrated a sample formed from one carcass ply in which carcass cords are arranged at an angle of 80 to 90°. The carcass ply is composed of a ply main body portion 6a extending between the bead cores 5, 5, and ply turnup portions 6b that are continuously formed at both ends of the ply main body portion and are each turned up around a bead core 5 from the axially inside to the axially outside of the tire.

In addition, between the ply main body portion 6a and each of the ply turnup portions 6b is disposed a bead apex 8 for reinforcing a bead, the bead apex being made of, for example, a hard rubber having a rubber hardness of 65 to 98° and extending taperedly from each of the bead core 5 radially outwardly. In this description, the "rubber hardness" means a hardness measured using a durometer type A at a temperature of 23°C. While the radial height Ha of the bead apex 8 from a bead base line BL is not particularly limited, if the height is excessively small, the runflat durability may be insufficient, and if the height is extremely large, this may result in an excessive increase in tire weight or a deterioration in riding comfort. From this point of view, it is preferable that the height Ha of the bead apex 8 be 10 to 60%, more preferably 20 to 50%, of the tire section height H.

This example has a turnup structure with a so-called "super high turnup" in which the ply turnup portion 6b of the carcass 6 turns up radially outward beyond the bead apex 8 and terminates with the outer end portion 6be thereof sandwiched between the ply body portion 6a and the tread-reinforcing cord layer 7. Thereby, the sidewall portion 3 can be effectively reinforced by the use of one carcass ply. Moreover, since the outer end portion 6be of the ply turnup portion 6b is located apart from the sidewall portion 3 that is greatly bent during runflat operations, damages developing from the outer end portion 6be can be restrained well. The axial width We of the overlapping part of the ply turnup portion 6b and the tread-reinforcing cord layer 7 is preferably 5 mm or more, more preferably 10 mm or more, and it is preferably 40 mm or less, and more preferably 30 mm or less, from the viewpoint of weight reduction. In the case of forming the carcass 6 from a plurality of carcass plies, it is preferable that at least one carcass ply have this structure.

The tread-reinforcing cord layer 7 is, in this example, formed from a belt 9 which is superposed on the carcass 6 and a band 10 which is superposed outside the belt. The belt 9 is formed from two or more belt plies, in this example two belt plies 9A and 9B, made of belt cords which are arranged at an angle of, for example, 10 to 45° with respect to the circumferential direction of the tire and are covered with a topping rubber. Belt cords in one ply intersect with belt cords in another ply to increase the belt rigidity, so that the tread portion 2 is almost entirely reinforced firmly by a hoop effect.

Moreover, the band 10 is formed of one of more band plies composed of band cords spirally wound at an angle of 5° or more with respect to the tire circumferential direction and covered with a topping rubber. It restricts the belt 9 to increase steering stability, high-speed durability, etc. The band ply includes a pair of left and right edge band plies which cover only the axial outer ends of the belt 9 and a full band ply which covers the belt 9 over the almost entire width thereof. These are used singly or in combination. In this example is illustrated a sample in which the band is made from one full band ply. The tread-reinforcing cord layer 7 can be formed from a belt 9 only or, alternatively, may be formed

from a band 10 only.

In the side wall portion 3 is disposed a side portion reinforcing layer 11 for securing a runflat function. The side portion reinforcing rubber layer 11 has a crescent sectional shape extending so that the thickness thereof may gradually decrease from a central portion having the maximum thickness Tm toward an inner end 11a and an outer end 11b in the radial direction of the tire. The inner end 11a is located inside the outer end of a bead apex 8 with respect to the tire radial direction, and the outer end 11 b is located inside the outer end 7e of a tread-reinforcing cord layer 7 with respect to the tire axial direction. At this time, it is preferable to adjust the radial width Wa of the overlap of the tire side portion reinforcing layer 11 and the bead apex 8 to 5 to 50 mm and the axial width Wo of the overlap of the side portion reinforcing layer 11 and the tread-reinforcing cord layer 7 to 50 mm or less. The difference in rigidity between the outer end 11b and the inner end 11a is thereby restrained from generating.

In this example, the side portion reinforcing layer 11 is disposed inside the ply main body portion 6a of the carcass 6 (i.e., on the tire cavity side) and, therefore, when the sidewall portion 3 is subject to flexural deformation, mainly a compressive load acts on the side portion reinforcing layer 11 and mainly a tensile load acts on the ply body 6a which contains a cord material. Since rubber is resistant to a compressive load and a cord material is resistant to a tensile load, the configuration of the side portion reinforcing rubber layer 11 like that mentioned above can efficiently enhance the flexural rigidity of the sidewall portion 3, thus effectively decreasing the vertical flexure of a tire during runflat running.

In addition, the side portion reinforcing layer 11 can use a rubber blending with a high hardness and a rubber blending with a low hardness. A rubber blending with a high hardness restrains compressive strain during runflat running to maintain the runflat performance. It is preferable for the rubber blending in this situation that the complex elastic modulus (E*) be within the range of 12 to 18 MPa and the tan$\delta$ be within the range of 0.06 to 0.1. On the other hand, a rubber blending with a low hardness reduces the exothermic property during runflat running to maintain the runflat performance. It is preferable for the rubber blending in this situation that the complex elastic modulus (E*) be within the range of 5 to 11 MPa and the tan$\delta$ be within the range of 0.02 to 0.06.

The maximum thickness of the side portion reinforcing layer 11, which may vary depending on the size, category, etc. of a tire, is preferably adjusted to within the range of 5 to 20 mm for a tire for passenger cars.

In this example, a case where a rim-protecting rib 12 is formed projectingly on the bead portion 4. This rim protect rib 12 is a rib projecting from a base profile line "j" to cover a rim flange JF. It has a trapezoidal cross section which is enclosed by a projecting face portion 12c which surmount the tip of the rim flange JF and projects most outwardly with respect to the tire axial direction, a radially inner slope which smoothly continues from the top face portion 12c to the outer surface of the bead portion, and a radially outer slope portion which smoothly continues from the top face portion 12c to the base profile line "j" in the vicinity of a tire maximum width point. The radially inner slope 11 is defined by a concave arc-like face having a larger radius of curvature than an arc-like portion of the rim flange JF, and serves to protect the rim flange JF from stones in normal running condition. On the other hand, it can serve to decrease the bead deformation to improve the steering stability and the runflat durability during runflat operations because the radially inner slope portion comes into contact with the rim flange JF while leaning against the arc-like portion of the rim flange JF.

In addition, in the present invention, in order to improve the runflat steering stability and the runflat durability, it is preferable to use an aramid fiber for the carcass cord.

The aramid fiber is known as a highly elastic fiber and can increase the load supporting ability of a tire by being used for a carcass cord of a runflat tire 1. Therefore, it is possible to reduce the deformation of a tire during runflat operations while, for example, reducing the number of carcass plies, making carcass cords thinner, and/or reducing the cord arrangement density (the number of cord ends). Aramid fiber exhibits a smaller decrease in elastic modulus than other organic fiber cord materials even under high temperatures of 100 to 150°C, and therefore has a characteristic in that it is excellent in heat resistance. It, thus, can prevent carcass cords from damaging due to their deterioration in strength even under increase in tire temperature during runflat running, or prevent the tire volume from increasing due to decrease in elastic modulus, or prevent the tire temperature from further increasing due to the increase in tire deformation. As a result, it is possible to improve the runflat durability. Moreover, since it is possible to increase the tire rigidity while maintaining a high elastic modulus even under increase in tire temperature, it is also possible to improve the steering stability during runflat operations. The increase in velocity and running distance during runflat running is thereby achieved.

Aramid fiber, however, tends to be poor in fatigue resistance due to its high elastic modulus. Therefore, in this example, a two-strand twist structure obtained by twisting two first-twisted aramid fiber strands 21 together by second twisting as illustrated in Fig. 2 is employed for carcass cords 20 and the twisting is performed at a twisting coefficient T which is higher than usual.

As well known in the art, the "twisting coefficient T" is represented by the following formula (1), where the number of first twists of a cord is denoted by N (unit: turns/10 cm), the total nominal decitex per one cord is represented by D (unit: dtex), and the specific gravity of the cord material is denoted by p:

$$T = N \times \sqrt{\{(0.125 \times D/2)/\rho\}} \times 10^{-3} \ldots (1)$$

By increasing the twisting coefficient T to within the range of 0.5 to 0.8, it is possible to improve the fatigue resistance, which is a drawback of aramid fiber cords and it becomes possible to greatly improve the runflat durability in comparison to conventional rayon cords. If the twisting coefficient T of the carcass cord 20 is less than 0.5, the effect of improving the fatigue resistance is small and it is impossible to increase the runflat durability sufficiently. If the twisting coefficient T is more than 0.8, the twist processing of a cord becomes difficult, so it is industrially disadvantageous. Particularly, the lower limit of the twisting coefficient T is preferably 0.6 or more, and the fatigue durability of a cord is thereby improved more and the runflat durability can be improved more.

In the carcass cords 20, in order to demonstrate an excellent reinforcing effect by taking advantage of such high elasticity, which is an important property of aramid fiber, the two-strand twist structure is adopted. In this occasion, while so-called "balanced twisting" in which the number of first twists is the same as the number of the second twists is preferable, the number of first twists may be differentiated from the number of second twists as long as the twist number ratio (first twist number/second twist number) falls within the range of from 0.2 to 2.0, preferably from 0.5 to 1.5.

The total nominal decitex D (fineness) is not particularly limited, but it is preferably within the range of 1500 to 5000 dtex for runflat tires. The product of the number of cord ends n (cords/5 cm) and the total nominal decitex D in the carcass ply is preferably within the range of 70000 to 150000. If it is less than 70000, the runflat durability or the steering stability becomes insufficient even if aramid fiber cords are used. On the other hand, if it is greater than 150000, the carcass rigidity becomes excessively high, resulting in deterioration in riding comfort, and the mass and the cost will increase unnecessarily. From such a point of view, the lower limit of the product Dxn more preferably is 100000 or more, and the upper limit more preferably is 120000 or less.

Damage to the carcass cords 20 caused by fatigue resistance occurs easily at a part which receives a compressive strain when a tire deforms, that is, at a bead side portion of a ply turnup portion 6b. In this example, however, a rim-protecting rib 12 is formed projectingly on the bead portion 4 as described above. Therefore, bead deformation which occurs during runflat operations is reduced, so that compressive strain hardly acts on the carcass cords 20. As a result, it is possible to further restrain the fatigue damage of carcass cords 20 in the use of aramid fiber and further improve the runflat durability. In other words, from the viewpoint of reduction in fatigue damage of cords, it is preferable, in a tire containing aramid fiber carcass cords 20, to use a rim-protecting rib 12.

Furthermore, in this example, a rubber having a complex elastic modulus E* within the range of 5 to 13 MPa, that is, a rubber with a higher elasticity than those of conventional carcass topping rubbers is addopted as a topping rubber of the carcass ply. It is noted that conventional carcass topping rubbers have a complex elastic modulus E* of about 3.8 MPa. By adopting a highly elastic rubber as a topping rubber as mentioned above, it is possible to reduce the strain which acts on the carcass cords 20 and thereby to achieve further improvement in runflat durability. If the complex elastic modulus E* is less than 5 MPa, the above-mentioned effect is not expectable; conversely, if it exceeds 13 MPa, the rubber becomes excessively hard, so that the riding comfort is deteriorated drastically. From such a viewpoint, the lower limit of the complex elastic modulus E* is preferably 5.5 MPa or more, more preferably 6 MPa or more. The upper limit is preferably 11 MPa or less, and more preferably 9 MPa or less.

In the tire meridian cross section of the aforementioned normal internal pressure condition, the profile of the tire external surface 2A is formed of a curved surface defined by a plurality of arcs different in radius of curvature. It is preferable to form the profile by a curved surface defined by a plurality of arcs whose radius of curvature R decreases gradually from the equatorial point CP which is an intersection of the tire external surface 2A and the tire equatorial plane C toward the grounding end. It, thereby, is possible to minimize the rubber volume of the side portion reinforcing layer 11, so that the weight of the tire can be reduced and the riding comfort can be improved. In particular, the adoption of a special profile like that proposed in Japanese Patent No. 2994989 makes it possible to exhibit the above-mentioned effect at a high level.

A detailed explanation is as follows. First of all, when a point on the tire external surface 2A which is apart from the tire equatorial plane C by a distance SP which is 45% of the tire maximum section width SW is assumed to be P as shown in Fig. 3, the radius of curvature RC of the tire external surface 2A is set so as to decrease gradually from the tire equatorial point CP to the point P. The "tire maximum section width SW" denotes the maximum width on the base profile line "j" (see Fig. 1) of the tire external surface 2A, and the base profile line "j" denotes a smooth profile line of the tire external surface 2A resulting from elimination of local concave and convex parts such as fine ribs and grooves showing letters, figures and marks for decoration or information, rim-protecting rib for preventing a rim from coming off and side-protecting rib 12 for protecting from a cut.

Further, points on the tire external surface 2A apart from the tire equatorial plane C by distances X60, X75, X90 and X100 which are 60%, 75%, 90% and 100% of the half width (SW/2) of the tire maximum section width SW, respectively, are assumed to be P60, P75, P90 and P100. Moreover, radial distances between the tire equatorial point

CP and each of the points P60, P75, P90 and P100 on the tire external surface 2A are assumed to be Y60, Y75, Y90 and Y100, respectively.

Furthermore, the tire section height, which is the radial distance from the bead base line BL to the tire equatorial point CP at the above-described normal internal pressure is assumed to be SH. At this time, the radial distances Y60, Y75, Y90 and Y100 satisfy the following relationships:

$$0.05 < Y60/SH \leq 0.1$$

$$0.1 < Y75/SH \leq 0.2$$

$$0.2 < Y90/SH \leq 0.4$$

$$0.4 < Y100/SH \leq 0.7$$

When the range RYi which satisfies the above relation ships are illustrated in Fig. 4 where

RY60 = Y60/SH
RY75 = Y75/SH
RY90 = Y90/SH
RY100 = Y100/SH.

It has been reported in Japanese Patent No. 2994989 that since a tread having a profile satisfying the above equations is very round as shown in Figs. 3 and 4, the footprint of the tire is in a longitudinally long elliptic shape that the ground contact width is small and the ground contact length is large, and the noise performance and aquaplaning performance can be improved. If the values of RY60, RY75, RY90 and RY100 are less than the above ranges, the tread portion 2 becomes flat and the profile of the tire external surface 2A approaches the profile of conventional tires. If they are more than the above ranges, the tire external surface 2A including the tread portion 2 has a markedly convex profile and the ground contact width becomes excessively small, so necessary running performances in normal running operation cannot be secured.

Since the aspect ratio of tire, the tire maximum section width, the tire maximum height and the like can be approximately determined from tire standards such as JATMA and ETRTO, the ranges of RY60, RY75, RY90 and RY100 can be readily calculated if the tire size is previously determined. Therefore, the tire external surface 2A can be appropriately determined by depicting it in a smooth curve from the tire equatorial point CP to the point P mentioned above so as to satisfy the ranges of RY60, RY75, RY90 and RY100 at respective positions and so as to gradually decrease the radius RC of curvature.

It is preferable that the above-mentioned tire have a ground contact width, which is an axial distance between axially outermost edges of a footprint formed when a tire contacts a ground, within the range of 50 to 65 % of the tire maximum section width SW under conditions of the normal internal pressure and a load of 80 % of the normal load. If the ground contact width is less than 50 % of the tire maximum section width SW, the wandering performance deteriorates under normal running conditions and uneven wear is easy to occur due to uneven ground contact pressure. If the ground contact width is more than 65 % of the tire maximum section width SW, the ground contact width is excessively large and it is difficult to simultaneously achieve both good passing noise performance and good aquaplaning performance.

Since such a special profile has the feature that the region of the sidewall portion is short, it is possible to further improve the runflat durability in combination with the properties of the rubber composition of the side portion reinforcing layer by adopting the profile in a runflat tire. Moreover, it is also possible to reduce the volume of a rubber in a side portion reinforcing layer 11 and, therefore, weight reduction and improvement in riding comfort of runflat tires can be achieved. On the other hand, the amount of deformation in the tread portion 2 having a large rubber volume becomes larger as compared with tires having a normal profile. Moreover, carcass cords using a highly heat-resistant aramid fiber can become more advantageous also for tires with such a special profile.

<EXAMPLES>

EXAMPLES 1 and 2 and COMPARATIVE EXAMPLES 1 and 2

<Adjustment of polyparaphenylene terephthalamide (PPTA) masterbatch>

Masterbatches containing polyparaphenylene terephthalamide (PPTA) and stearic acid were adjusted on the basis of Table 1.

[Table 1]

| | | % by mass |
|---|---|---|
| Para-aramid fiber | (Note 1) | 50 |
| Silane coupling agent | (Note 2) | 6 |
| Vulcanization accelerator | (Note 3) | 0.3 |
| Sulfur | (Note 4) | 0.1 |
| Stearic acid | (Note 5) | 42 |

(Note 1) Polyparaphenylene terephthalamide (PPTA): "Twaron" produced by Teijin, Ltd.
(Note 2) Silane coupling agent: "Si69" produced by Degussa Co.
(Note 3) Vulcanization accelerator: "NS" produced by Ouchi Shinko Chemical Industrial Co., Ltd. company.
(Note 4) Sulfur: Insoluble sulfur "MU-CRON OT" produced by Shikoku

Chemicals Corporation

(Note 5) Stearic acid: "TSUBAKI" produced by NOF Corporation

<Preparation of Rubber Composition>

According to the compositions shown in Table 2, the components other than the insoluble sulfur and the vulcanization accelerator were kneaded at 150°C for 4 minutes using a Banbury mixer. Using the next open roll, sulfur and a vulcanization accelerator were added to the resultant kneaded matters, followed by kneading at 80°C for 3 minutes to afford unvulcanized rubber compositions 1 to 4, which were used for test production of tires.

The resulting unvulcanized rubber compositions were press vulcanized at 160°C for 20 minutes to afford vulcanized rubber compositions, which were subjected to the evaluations of strength at break and viscoelastic property.

<Production of runflat tire>

Using the rubber compositions 1 to 4 given in Table 2 as side portion reinforcing layers, they were molded into the shape of a lining strip layer. They were then laminated with other tire components, so that unvulcanized tires were molded. The molded tires were subjected to press vulcanization at 160°C for 120 minutes. Thus, runflat tires having a size of 215/45ZR17 were produced.

The runflat tires of Examples 1, 2 and Comparative Examples 1, 2 have the same basic structure shown in Fig. 1 and are the same except for the rubber compositions of their side portion reinforcing layers. In these examples, rayon cords were used for the carcass and the number of ply was one. The cord angle was 90° with respect to the tire circumferential direction. Moreover, two steel cord belt plies were used for a belt layer. The plies were laminated opposite at a cord angle of 24° with respect to the tire circumferential direction.

[Table 2]

| | | Example 1 | Example 2 | Comparative Example 1 | Comparative Example 2 |
|---|---|---|---|---|---|
| Combination No. | | 1 | 2 | 3 | 4 |
| NR | (Note 1) | 70 | - | 70 | - |
| SBR | (Note 2) | - | 70 | - | 70 |
| BR | (Note 3) | 30 | 30 | 30 | 30 |
| Carbon black | (Note 4) | 50 | 50 | 50 | 50 |

(continued)

| | | Example 1 | Example 2 | Comparative Example 1 | Comparative Example 2 |
|---|---|---|---|---|---|
| Stearic acid | (Note 5) | 0.5 | 0.5 | 2 | 2 |
| Zinc oxide | (Note 6) | 3 | 3 | 3 | 3 |
| Antioxidant | (Note 7) | 1 | 1 | 1 | 1 |
| Para-aramid fiber masterbatch | (Note 8) | 2 | 2 | - | - |
| Sulfur | (Note 9) | 5 | 5 | 5 | 5 |
| Accelerator | (Note 10) | 2 | 2 | 2 | 2 |
| Durometer A hardness | | 76 | 79 | 75 | 75 |
| TB(Mpa) | | 15.3 | 16.8 | 9.45 | 8.54 |
| (E*)Mpa | | 9.1 | 10.2 | 7.6 | 8.2 |
| $E''/(E^*)^2 \times 10^{-9} Pa^{-1}$ | | 5.5 | 6.7 | 3.8 | 3.8 |
| $\tan\delta$ index | | 87 | 82 | 100 | 98 |
| Runflat durability | | 206 | 212 | 100 | 104 |

(Note 1) NR: RSS #3
(Note 2) SBR-1: Commercial name "SL574" produced by JSR Corporation (1,2-syndiotactic polybutadiene; crystal content = 0% by mass)
(Note 3) BR: "VCR412" produced by Ube Industries, Ltd.
(Note 4) Carbon black (FEF): DIABLACK E produced by Mitsubishi Chemical Corporation ($N_2SA$: 41 $m^2/g$, DBP oil absorption: 115 ml/100 g)
(Note 5) Stearic acid: "TSUBAKI" produced by NOF Corporation
(Note 6) Zinc oxide: "Zinc Oxide Type 2" produced by Mitsui Mining and Smelting Co., Ltd.
(Note 7) Antioxidant: ANTIGENE 6C, N-(1,3-dimethylbutyl)-N'-phenyl-p-phenylenediamine, produced by Sumitomo Chemical Co., Ltd.
(Note 8) Polyparaphenylene terephthalamide (PPTA) masterbatch: in combinations given in Table 1.
(Note 9) Sulfur: Insoluble sulfur "MU-CRON OT" produced by Shikoku Chemicals Corporation
(Note 10) Vulcanization accelerator: "Nocceler NS" (N-tert-butyl-2-benzothiazolylsufenamide) produced by Ouchi Shinko Chemical Industrial Co., Ltd.

The following evaluations were performed. The results of the evaluations are shown in Table 2.

<Viscoelastic property>

As to rubber specimens of a side portion reinforcing layer adjusted by compositions 1 through 4, E" (loss elastic modulus), E* (complex elastic modulus) and $\tan\delta$ were measured using a viscoelasticity spectrometer manufactured by Iwamoto Corporation at a measurement temperature of 70°C, an initial strain of 10%, a dynamic strain of $\pm 1\%$ and a frequency of 10 Hz, and then $E''/(E^*)^2$ was calculated.
The $\tan\delta$ index represents a relative value determined by taking the $\tan\delta$ value of Comparative Example 1 as 100.

<Strength at break>

In accordance with JIS K6251 "Vulcanized Rubber and Thermoplastic Rubber, Determination of Tensile Properties", a tensile test was carried out using type 3 dumbbell specimens made of the vulcanized rubber sheets and determined the strength (TB) at break at 23°C.

<Runflat durability>

Respective sample tires were caused to run on a drum tester at an internal pneumatic pressure of 0 kPa, a velocity of 80 km/h and under a longitudinal load (4.14 kN), and the running distances until tires burst were measured. The Examples and Comparative Examples were evaluated using an index which is 100 for Comparative Example 1. The larger the value, the better the runflat durability is.

$$\text{(Durability)} = \text{(Running distance of tested tire)} \div \text{(Running distance of Comparative Example 1)} \times 100$$

Examples 3 to 7 and Comparative Examples 3 to 7

Run flat tires in which the side portion reinforcing layers of formulation 1 and formulation 3 used Example 1 and Comparative Example 1 were used and the materials and structures of the carcass plies were changed were produced in the same manner as Example 1.

The basic structure of the runflat tires are as depicted in Fig. 1, and the same specification except for the materials and structures of carcasses given in Table 3 was used. The basic specification is as follows:

Carcass: one ply; cord angle = 90° with respect to the circumferential direction.
Belt layer: two steel cord belt plies, laminated opposite at a cord angle of 24° with respect to the tire circumferential direction.

Side portion reinforcing layer: the maximum thickness of rubber = 10.0 mm

In Table 3, the twisting coefficient T is represented by the following formula (1):

$$T = N \times \sqrt{\{(0.125 \times D/2)/\rho\}} \times 10^{-3} \text{ --- } (1)$$

The rayon fiber cords had a specific gravity p of 1.51 and the aramid fiber cords had a specific gravity p of 1.44.

As to the tread profile, tires were used which have substantially the same profile within the ranges of RY60 = 0.05 to 0.1, RY75 = 0.1 to 0.2, RY90 = 0.2 to 0.4, and RY100=0.4 to 0.7.

[Table 3]

| | | Example 3 | Example 4 | Example 5 | Comparative Example 3 | Comparative Example 4 | Comparative Example 5 | Example 6 | Example 7 | Comparative Example 6 | Comparative Example 7 |
|---|---|---|---|---|---|---|---|---|---|---|---|
| Composition of side portion reinforcing layer | | 1 | 1 | 1 | 3 | 3 | 3 | 1 | 1 | 3 | 3 |
| Carcass | Cord material | Aramid | Aramid | Aramid | Aramid | Aramid | Aramid | Rayon | Aramid | Rayon | Aramid |
| | Cord composition (dtex) | 1100 | 1100 | 1100 | 1100 | 1100 | 1100 | 1840 | 1100 | 1840 | 1100 |
| | Total nominal fineness (dtex) | 2200 | 2200 | 2200 | 2200 | 2200 | 2200 | 3680 | 2200 | 3680 | 2200 |
| | Specific gravity of cord | 1.44 | 1.44 | 1.44 | 1.44 | 1.44 | 1.44 | 1.51 | 1.41 | 1.51 | 1.41 |
| | First twisting N (turns/10 cm) | 53 | 68 | 68 | 53 | 68 | 68 | 48 | 44 | 48 | 44 |
| | Second twisting N (turns/10 cm) | 53 | 68 | 68 | 53 | 68 | 68 | 48 | 44 | 48 | 44 |
| | Twisting coefficient T | 0.5179 | 0.7745 | 0.6622 | 0.5179 | 0.7745 | 0.6622 | 0.5924 | 0.43 | 0.5924 | 0.43 |
| | Cord end number (cords/5 cm) | 53 | 53 | 53 | 53 | 53 | 53 | 51 | 53 | 51 | 53 |
| | E* of carcass topping rubber (Mpa) | 5.7 | 5.7 | 10.3 | 5.7 | 5.7 | 10.3 | 5.7 | 5.7 | 5.7 | 5.7 |
| Run flat durability | | 227 | 243 | 260 | 120 | 129 | 134 | 200 | 191 | 100 | 93 |

<Evaluation of runflat durability>

The runflat durability was evaluated in the same method as Example 1.

Comparisons of Example 3 to Comparative Example 3, Example 4 to Comparative Example 4 and Example 5 to Comparative Example 5 show that in the cases of using carcasses of the same aramid fiber cords, the runflat durability is greatly improved by the use of composition 3 instead of composition 1 of the side portion reinforcing layer.

Comparisons of Example 6 to Comparative Example 6 and Example 7 to Comparative Example 7 show that in the cases of using carcasses of the same rayon fiber cords, the runflat durability is greatly improved by the use of composition 3 instead of composition 1 of the side portion reinforcing layer.

In comparison of Examples 3 through 5 and Example 7, it is shown that the twisting coefficient T is preferably within the range of 0.5 to 0.8.

INDUSTRIAL APPLICABILITY

The present invention is directed to a rubber composition for side reinforcement excellent in runflat performance and a runflat tire using the same, and can be applied not merely to tires for passenger cars but also to tires for light trucks and tires for trucks and buses.

## Claims

1. A runflat tire comprising a carcass (6) extending from a tread portion (2) to a bead core (5) of a bead portion (4) via a sidewall portion (3), a belt (9) layer disposed inside the tread portion (2) and on the radially outward of said carcass, and a side portion reinforcing layer (11) which is disposed inside both the sidewall portion (3) and said carcass (6) and has a crescent cross-sectional shape extending from the center portion having a maximum thickness toward both the radially inward and the radially outward with gradual decrease in thickness, wherein the side portion reinforcing layer (11) for a runflat tire is made of a rubber composition prepared by blending 0.1 to 50 parts by mass of a reinforcing material of polyparaphenylene terephthalamide based on 100 parts by mass of a rubber component comprising 20 to 80% by mass of a natural rubber and/or a polyisoprene rubber and 80 to 20% by mass of a polybutadiene rubber.

2. The runflat tire according to claim 1 wherein the reinforcing material is polyparaphenylene terephthalamide and/or a masterbatch comprising the polyparaphenylene terephthalamide and stearic acid.

3. The runflat tire according to claim 1 or 2, wherein the complex elastic modulus (E*) of the rubber composition is 10 MPa or more.

4. The runflat tire (1) according to claim 1, wherein said carcass (6) is made of a carcass ply made of a carcass cord (20) which is arranged at an angle of 45 to 90° with respect to the circumferential direction of the tire and is covered with a topping rubber, said carcass cord (20) being an aramid fiber cord.

5. The runflat tire (1) according to claim 4, wherein said carcass cord (20) has a two-strand twist structure in which two first-twisted filament bundles are twisted together by second-twisting.

6. The runflat tire (1) according to claim 4 or 5, wherein said carcass cord (20) has a twisting coefficient T represented by the following formula (1) ranging from 0.5 to 0.8:

$$T = N \times \sqrt{\{(0.125 \times D/2)/\rho\}} \times 10^{-3} \ldots (1)$$

wherein N is a second twisting number (turns/10 cm), D is a total nominal decitex (fineness) and ρ is a specific gravity of a cord material.

7. The runflat tire (1) according to any one of claims 4 to 6, wherein said topping rubber of said carcass ply has a complex elastic modulus (E*) within a range of 5 to 13 MPa.

8. The runflat tire (1) according to any one of claims 1 and 4 to 7, wherein in the tire meridian cross section at a normal

internal pressure condition where the tire is attached to a regular rim and inflated at a normal internal pressure, when a point on the tire external surface which is apart from the tire equatorial plane C by a distance SP which is 45% of the tire maximum section width SW is assumed to be P, the radius of curvature, RC, of the tire external surface decreases gradually from an equatorial point CP at which the tire external surface intersects with the tire equatorial plane C to said point P, and the following relationships are satisfied when Y60, Y75, Y90 and Y100 denote, respectively, radial distances between the points on the tire external surface apart from the tire equatorial plane C by 60%, 75%, 90% and 100% of the half width (SW/2) of the tire maximum section width SW and the normal CX with respect to the tire equatorial plane C at the equatorial point P, and SH denotes the tire section height:

$0.05 < Y60/SH \leq 0.1$
$0.1 < Y75/SH \leq 0.2$
$0.2 < Y90/SH \leq 0.4$
$0.4 < Y100/SH \leq 0.7$

**9.** The runflat tire (1) according to any one of claims 1 to 8, wherein the radial width Wa of the overlap of the tire side portion reinforcing layer (11) and the bead apex (8) is 5 to 50 mm and the axial width Wo of the overlap of the side portion reinforcing layer (11) and the tread-reinforcing cord layer (7) is 50 mm or less.

**10.** A method for producing a runflat tire that comprises a carcass (6) extending from a tread portion (2) to a bead core (5) of a bead portion (4) via a sidewall portion (3), a belt (9) layer disposed inside the tread portion (2) and on the radially outward of said carcass, and a side portion reinforcing layer (11) which is disposed inside both the sidewall portion (3) and said carcass (6) and has a crescent cross-sectional shape extending from the center portion having a maximum thickness toward both the radially inward and the radially outward with gradual decrease in thickness, the method comprising:

a step of preparing a masterbatch comprising polyparaphenylene terephthalamide and/or the polyparaphenylene terephthalamide and stearic acid, and
a step of preparing a rubber composition by mixing the masterbatch, a natural rubber and/or a polyisoprene rubber, and a polybutadiene rubber,
wherein the rubber composition is composed of a rubber composition prepared by blending 0.1 to 50 parts by mass of a reinforcing material of polyparaphenylene terephthalamide based on 100 parts by mass of a rubber component comprising 20 to 80% by mass of a natural rubber and/or a polyisoprene rubber and 80 to 20% by mass of a polybutadiene rubber.

**11.** The method for producing a a runflat tire according to claim 10, wherein said masterbatch comprises polyparaphenylene terephthalamide and stearic acid.

**Patentansprüche**

**1.** Notlaufreifen, umfassend eine Karkasse (6), die sich von einem Laufflächenabschnitt (2) zu einem Wulstkern (5) eines Wulstabschnitts (4) über einen Seitenwandabschnitt (3) erstreckt, eine Gürtelschicht (9), die innerhalb des Laufflächenabschnitts (2) und radial außen liegend von der Karkasse angeordnet ist, und eine Seitenabschnitts-Verstärkungsschicht (11), die innerhalb sowohl des Seitenwandabschnitts (3) als auch der Karkasse (6) angeordnet ist und eine sichelförmige Querschnittsform aufweist, die sich von dem zentralen Abschnitt mit einer maximalen Dicke sowohl axial nach innen als auch axial nach außen mit allmählich abnehmender Dicke erstreckt, wobei die Seitenabschnitts-Verstärkungsschicht (11) für einen Notlaufreifen aus einer Kautschukzusammensetzung hergestellt ist, die durch Mischen von 0,1 bis 50 Masseteilen eines Verstärkungsmaterials aus Polyparaphenylenterephthalamid bezogen auf 100 Masseteile einer Kautschukkomponente, die 20 bis 80 Masse-% eines Naturkautschuks und/oder eines Polyisoprenkautschuks und 80 bis 20 Masse-% eines Polybutadienkautschuks umfasst, zubereitet ist.

**2.** Notlaufreifen nach Anspruch 1, wobei das Verstärkungsmaterial Polyparaphenylenterephthalamid und/oder ein Masterbatch, der das Polyparaphenylenterephthalamid und die Stearinsäure umfasst, ist.

**3.** Notlaufreifen nach Anspruch 1 oder 2, wobei der komplexe Elastizitätsmodul (E*) der Kautschukzusammensetzung 10 MPa oder mehr beträgt.

**4.** Notlaufreifen (1) nach Anspruch 1, wobei die Karkasse (6) aus einer Karkasslage hergestellt ist, die aus einem Karkasskord (20) hergestellt ist, der unter einem Winkel von 45 bis 90° mit Bezug auf die Umfangsrichtung des Reifens angeordnet und mit einem Gummierungskautschuk bedeckt ist, wobei der Karkasskord (20) ein Aramidfaserkord ist.

**5.** Notlaufreifen (1) nach Anspruch 4, wobei der Karkasskord (20) eine Verdrillungsstruktur mit zwei Strängen aufweist, in welcher zwei zuerst verdrillte Filamentbündel durch zweites Verdrillen miteinander verdrillt sind.

**6.** Notlaufreifen (1) nach Anspruch 4 oder 5, wobei der Karkasskord (20) eine Verdrillungskoeffizienten T aufweist, der durch folgende Formel (1) dargestellt ist und im Bereich von 0,5 bis 0,8 liegt:

$$T=N\times\sqrt{\{(0{,}125\times D/2)/\rho\}}\times 10^{-3} \ldots (1)$$

wobei N eine zweite Verdrillungszahl (Umdrehungen/10 cm) ist, D der gesamte nominale Dezitex (Feinheit) ist, und ρ ein spezifisches Gewicht eines Kordmaterials ist.

**7.** Notlaufreifen (1) nach einem der Ansprüche 4 bis 6, wobei der Gummierungskautschuk der Karkasslage einen komplexen Elastizitätsmodul (E*) in einem Bereich von 5 bis 13 MPa aufweist.

**8.** Notlaufreifen (1) nach einem der Ansprüche 1 und 4 bis 7, wobei in dem Reifenmeridianquerschnitt unter einer normalen Innendruckbedingung, bei der der Reifen auf eine reguläre Felge aufgezogen und auf einen normalen Innendruck aufgepumpt ist, wenn ein Punkt auf der Reifenaußenfläche, der von der Reifenäquatorialebene C mit einer Distanz SP getrennt ist, die 45 % der maximalen Querschnittsbreite SW des Reifens beträgt, als P angenommen wird, der Krümmungsradius RC der Reifenaußenfläche allmählich von einem Äquatorialpunkt CP, bei welchem die Reifenaußenfläche die Reifenäquatorialebene C schneidet, zu dem Punkt P abnimmt, und die folgenden Beziehungen erfüllt sind, wenn Y60, Y75, Y90 bzw. Y100 jeweils radiale Abstände zwischen den Punkten auf der Reifenaußenfläche, die von der Reifenäquatorialebene C mit 60 %, 75 %, 90 % und 100 % der Halbbreite (SW/2) der maximalen Querschnittsbreite SW des Reifens getrennt sind, und der Normalen CX mit Bezug auf die Reifenäquatorialebene C an dem Äquatorialpunkt P bezeichnen, und SH die Reifenquerschnittshöhe bezeichnet:

$0{,}05 < Y60/SH \le 0{,}1$
$0{,}1 < Y75/SH \le 0{,}2$
$0{,}2 < Y90/SH \le 0{,}4$
$0{,}4 < Y100/SH \le 0{,}7$

**9.** Notlaufreifen (1) nach einem der Ansprüche 1 bis 8, wobei die radiale Breite Wa der Überlappung der Reifenseitenabschnitts-Verstärkungsschicht (11) und des Wulstkernreiters (8) 5 bis 50 mm beträgt, und die axiale Breite Wo der Überlappung der Seitenabschnitts-Verstärkungsschicht (11) und der Laufflächen-Verstärkungskordschicht (7) 50 mm oder weniger beträgt.

**10.** Verfahren zum Herstellen eines Notlaufreifens, der eine Karkasse (6), die sich von einem Laufflächenabschnitt (2) zu einem Wulstkern (5) eines Wulstabschnitts (4) über einen Seitenwandabschnitt (3) erstreckt, eine Gürtelschicht (9), die innerhalb des Laufflächenabschnitts (2) und radial außen von der Karkasse angeordnet ist, und eine Seitenabschnitts-Verstärkungsschicht (11), die innerhalb sowohl des Seitenwandabschnitts (3) als auch der Karkasse (6) angeordnet ist und eine sichelförmige Querschnittsform aufweist, die sich von dem zentralen Abschnitt mit einer maximalen Dicke sowohl radial nach innen als auch radial nach außen mit allmählich abnehmender Dicke erstreckt, umfasst, wobei das Verfahren umfasst:

einen Schritt eines Herstellens eines Masterbatches, der Polyparaphenylenterephthalamid und/oder das Polyparaphenylenterephthalamid und Stearinsäure umfasst, und
einen Schritt eines Herstellens einer Kautschukzusammensetzung durch Mischen des Masterbatches, eines Naturkautschuks und/oder eines Polyisoprenkautschuks und eines Polybutadienkautschuks,
wobei die Kautschukzusammensetzung aus einer Kautschukzusammensetzung hergestellt wird, die durch Mischen von 0,1 bis 50 Masseteilen eines Verstärkungsmaterials aus Polyparaphenylenterephtalamid bezogen auf 100 Masseteile einer Kautschukkomponente, die 20 bis 80 Masse-% eines Naturkautschuks und/oder eines Polyisoprenkautschuks und 80 bis 20 Masse-% eines Polybutadienkautschuks umfasst, zubereitet wird.

11. Verfahren zum Herstellen eines Notlaufreifens nach Anspruch 10, wobei der Masterbatch Polyparaphenylenterephthalamid und Stearinsäure umfasst.

**Revendications**

1. Pneu de roulage à plat comprenant une carcasse (6) s'étendant à partir d'une partie de bande de roulement (2) jusqu'à une tringle (5) d'une partie de talon (4) via une partie de paroi latérale (3), une couche de ceinture (9) disposée à l'intérieur de la partie de bande de roulement (2) et radialement vers l'extérieur de ladite carcasse, et une couche de renforcement de partie latérale (11) qui est disposée à l'intérieur à la fois de la partie de paroi latérale (3) et de ladite carcasse (6) et a une forme transversale de croissant s'étendant à partir de la partie centrale ayant une épaisseur maximum à la fois radialement vers l'intérieur et radialement vers l'extérieur avec une réduction progressive de l'épaisseur, dans lequel la couche de renforcement de partie latérale (11) pour un pneu de roulage à plat est réalisée avec une composition de caoutchouc préparée en mélangeant de 0,1 à 50 parties en poids d'un matériau de renforcement de polyparaphénylène téréphthalamide basé sur 100 parties en poids d'un composant en caoutchouc comprenant de 20 à 80% en poids de caoutchouc naturel et/ou d'un caoutchouc de polyisoprène et de 80 à 20% en poids d'un caoutchouc de polybutadiène.

2. Pneu de roulage à plat selon la revendication 1, dans lequel le matériau de renforcement est le polyparaphénylène téréhthalamide et/ou un mélange maître comprenant du polyparaphénylène téréphthalamide et de l'acide stéarique.

3. Pneu de roulage à plat selon la revendication 1 ou 2, dans lequel le module élastique complexe (E*) de la composition de caoutchouc est de 10 MPa ou plus.

4. Pneu de roulage à plat (1) selon la revendication 1, dans lequel ladite carcasse (6) est réalisée avec un pli de carcasse réalisé avec un fil câblé de carcasse (20) qui est agencé à un angle de 45 à 90° par rapport à la direction circonférentielle du pneu et est recouvert avec un caoutchouc de gommage, ledit fil câblé de carcasse (20) étant un fil câblé de fibres d'aramide.

5. Pneu de roulage à plat (1) selon la revendication 4, dans lequel ledit fil câblé de carcasse (20) a une structure de torsion à deux brins dans laquelle deux faisceaux de filaments déjà torsadés dans une première étape sont torsadés ensemble par une seconde torsion.

6. Pneu de roulage à plat (1) selon la revendication 4 ou 5, dans lequel ledit fil câblé de carcasse (20) a un coefficient de torsion T représenté par la formule (1) suivante de 0,5 à 0,8 :

$$T = N \times \sqrt{\{(0,125 \times D/2)/\rho\}} \times 10^{-3} \ldots (1)$$

dans laquelle N est un second nombre de torsion (tours/10 cm), D est un décitex nominal total (finesse) et p est une gravité spécifique d'un matériau de fil câblé.

7. Pneu de roulage à plat (1) selon l'une quelconque des revendications 4 à 6, dans lequel ledit caoutchouc de gommage dudit pli de carcasse a un module élastique complexe (E*) dans une plage de 5 à 13 MPa.

8. Pneu de roulage à plat (1) selon l'une quelconque des revendications 1 et 4 à 7, dans lequel dans la section transversale méridienne du pneu dans une condition de pression interne normale dans laquelle le pneu est fixé sur une jante ordinaire et gonflé à une pression interne normale, lorsque l'on suppose qu'un point sur la surface externe du pneu qui est éloigné du plan équatorial du pneu C selon une distance SP qui représente 45% de la largeur de section maximum SW, est P, le rayon de courbure RC de la surface externe du pneu diminue progressivement à partir d'un point équatorial CP auquel la surface externe du pneu coupe le plan équatorial C du pneu audit point P, les relations suivantes sont satisfaites lorsque Y60, Y75, Y90 et Y100 désignent respectivement des distances radiales entre les points sur la surface externe du pneu éloignés du plan équatorial du pneu C selon 60%, 75%, 90% et 100% de la moitié de la largeur (SW/2) de la largeur de section maximum du pneu SW et le CX normal par rapport au plan équatorial du pneu C au point équatorial P et SH désigne la hauteur de section du pneu :

$0,05 < Y60/SH \leq 0,1$

$0{,}1 < Y75/SH \leq 0{,}2$
$0{,}2 < Y90/SH \leq 0{,}4$
$0{,}4 < Y100/SH \leq 0{,}7$.

**9.** Pneu de roulage à plat (1) selon l'une quelconque des revendications 1 à 8, dans lequel la largeur radiale Wa du chevauchement de la couche de renforcement de partie latérale du pneu (11) et du sommet de talon (8) est de 5 à 50 mm et la largeur axiale Wo du chevauchement de la couche de renforcement de partie latérale (11) et de la couche de fil câblé de renforcement de bande de roulement (7) est de 50 mm ou moins.

**10.** Procédé pour produire un pneu de roulage à plat qui comprend une carcasse (6) s'étendant à partir d'une partie de bande de roulement (2) à une tringle (5) d'une partie de talon (4) via une partie de paroi latérale (3), une couche de ceinture (9) disposée à l'intérieur de la partie de bande de roulement (2) et radialement vers l'extérieur de ladite carcasse, et une couche de renforcement de partie latérale (11) qui est disposée à l'intérieur à la fois de la partie de paroi latérale (3) et de ladite carcasse (6) et a une force de section transversale de croissant s'étendant à partir de la partie centrale ayant une épaisseur maximum à la fois radialement vers l'intérieur et radialement vers l'extérieur avec une réduction progressive de l'épaisseur, le procédé comprenant :

une étape consistant à préparer un mélange maître comprenant du polyparaphénylène téréphthalamide et/ou du polyparaphénylène téréphthalamide et de l'acide stéarique, et
une étape consistant à préparer une composition de caoutchouc en mélangeant le mélange maître, un caoutchouc naturel et/ou un caoutchouc de polyisoprène et un caoutchouc de polybutadiène,
dans lequel la composition de caoutchouc est composée d'une composition de caoutchouc préparée en mélangeant 0,1 à 50 parties en poids d'un matériau de renforcement de polyparaphénylène téréphthalamide basé sur 100 parties en poids d'un composant de caoutchouc comprenant de 20 à 80% en poids d'un caoutchouc naturel et/ou d'un caoutchouc de polyisoprène et de 80 à 20% en poids d'un caoutchouc de polybutadiène.

**11.** Procédé pour produire un pneu de roulage à plat selon la revendication 10, dans lequel le mélange maître comprend du polyparaphénylène téréphthalamide et de l'acide stéarique.

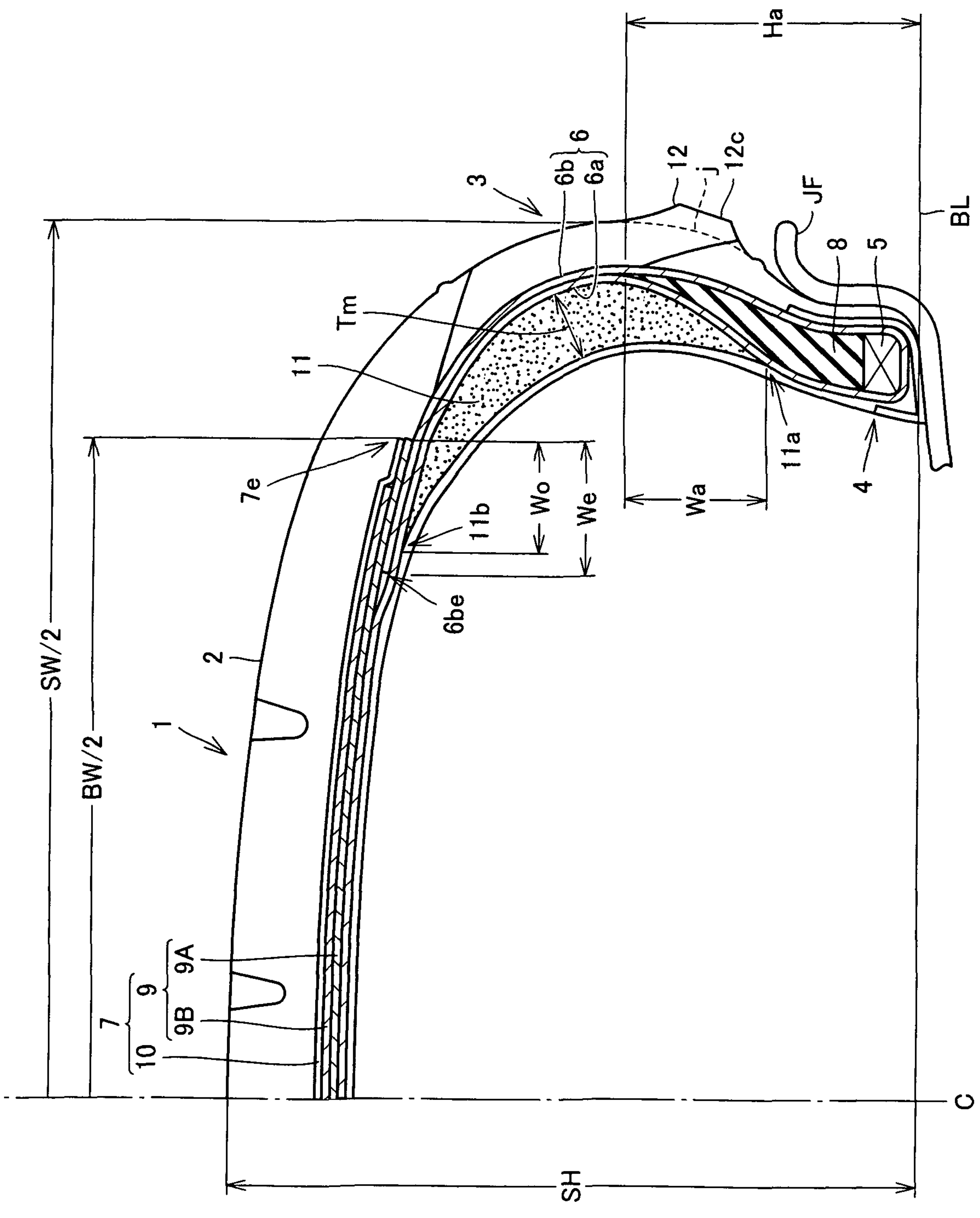
Ha
6b
6a
6
3
12
j
12c
JF
8
5
BL
Tm
11
11a
4
7e
Wo
We
Wa
11b
6be
SW/2
BW/2
2
1
9A
9
9B
7
10
C
SH

FIG.1

FIG.2

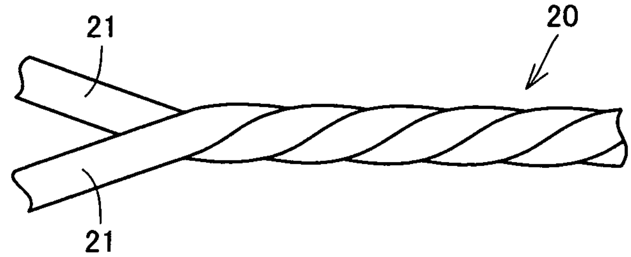

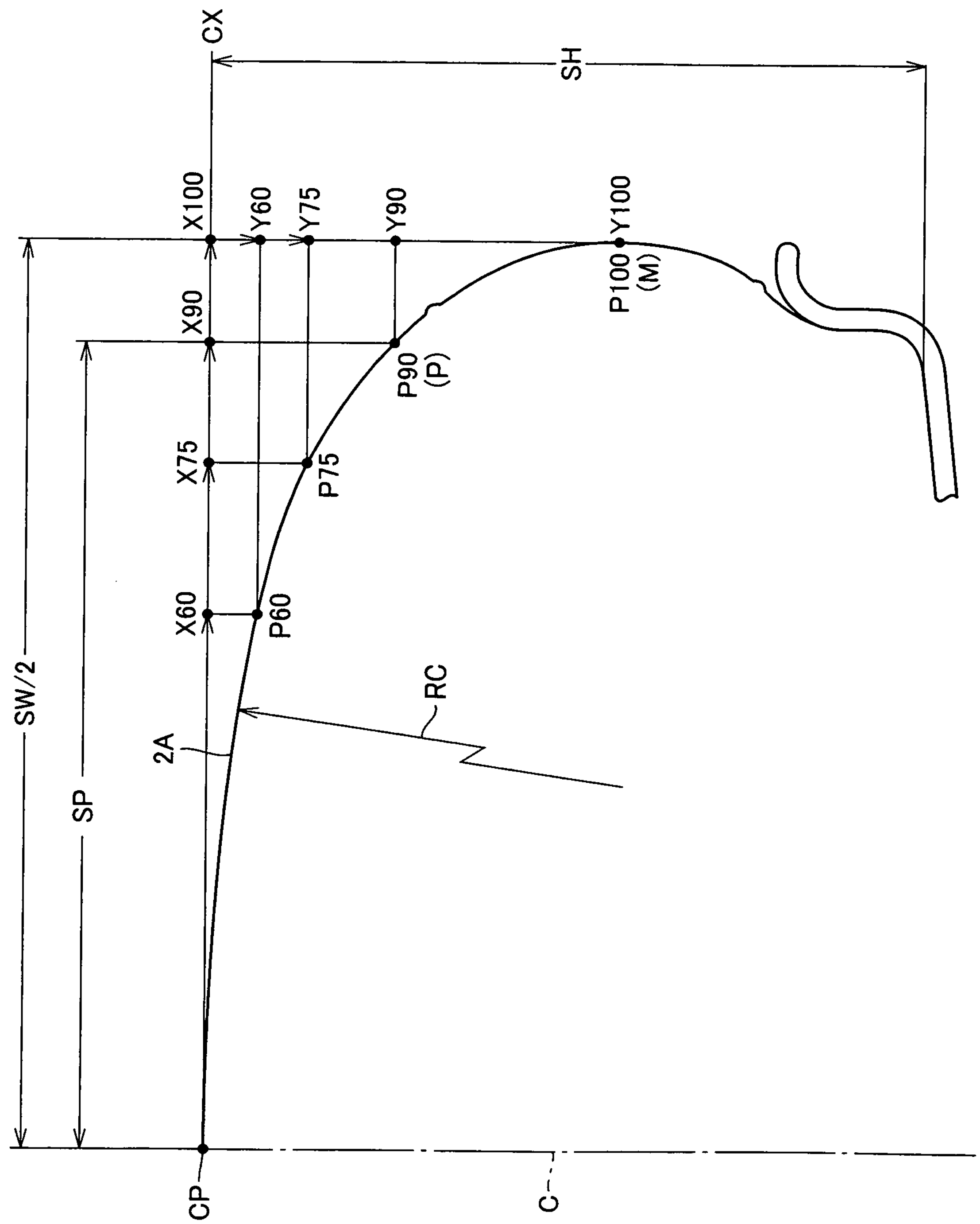
CX
SH
X100
Y60
Y75
Y90
Y100
P100
(M)
X90
P90
(P)
X75
P75
X60
P60
RC
SW/2
2A
SP
CP
C

FIG.3

FIG.4

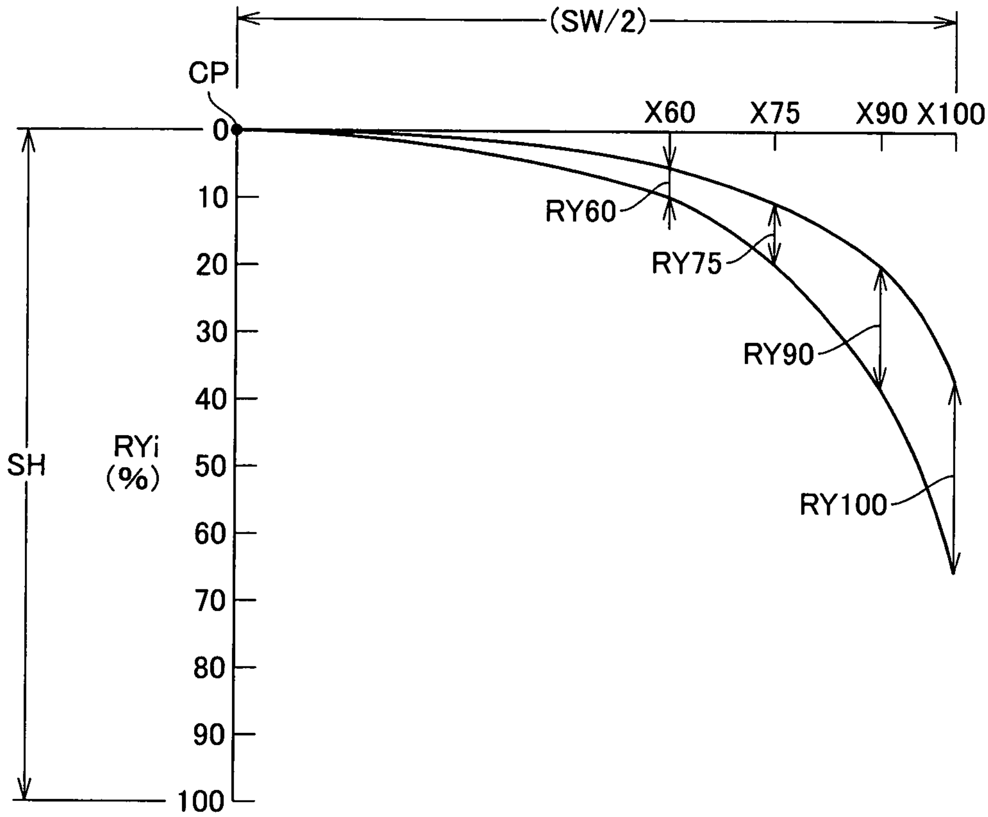
(SW/2)
CP
X60
X75
X90
X100
0
10
20
30
40
50
60
70
80
90
100
RY60
RY75
RY90
RY100
SH
RYi
(%)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005280459 A
- JP 2007161071 A
- US 20060060284 A1
- EP 1798073 A1
- JP 2994989 B